# EUROPEAN PATENT APPLICATION

(11) **EP 1 248 481 A1**
(43) Date of publication of application: **09.10.2002**
(21) Application number: 00979042.9
(22) Date of filing: 01.12.2000
(51) Int. Cl.: H04Q 7/38

(54) **BASE STATION DEVICE AND CIRCUIT CONNECTION CONTROL METHOD**

(71) Applicant: MATSUSHITA ELECTRIC INDUSTRIAL CO., LTD., Kadoma-shi, Osaka 571-8501 (JP)
(72) Inventor: SHOJI, Takahiro, Yokohama-shi, Kanagawa 221-0005 (JP); KATO, Osamu, Yokosuka-shi, Kanagawa 237-0066 (JP)
(74) Representative: Grünecker, Kinkeldey, Stockmair & Schwanhäusser Anwaltssozietät
(86) International application number: JP0008506
(87) International publication number: WO02045454

(57) **Abstract**

When there is a call access request, channel status deciding section 105 decides as to whether the channel is saturated based on the number of users registered in user code storing section 106. If there is a call access request from a user that desires good-quality service when a channel is saturated, user code registration section 107 searches user code storing section 106 to see whether there is any low-rate user registered that holds a low-rate contract. When a low-rate user is registered, this user's channel is cut off, and a channel for the user that has made a call access request is accessed. By this means, it is possible to satisfy every user's need in wireless communication and make effective use of frequency resources.

## Description

### Technical Field

The present invention relates to wireless base station apparatus and channel access control method for use in mobile communication systems such as mobile phones and car-phones.

### Background Art

Recent years have seen a rapid growth of wireless communication services by means of such mobile communication systems as mobile phones and car-phones.

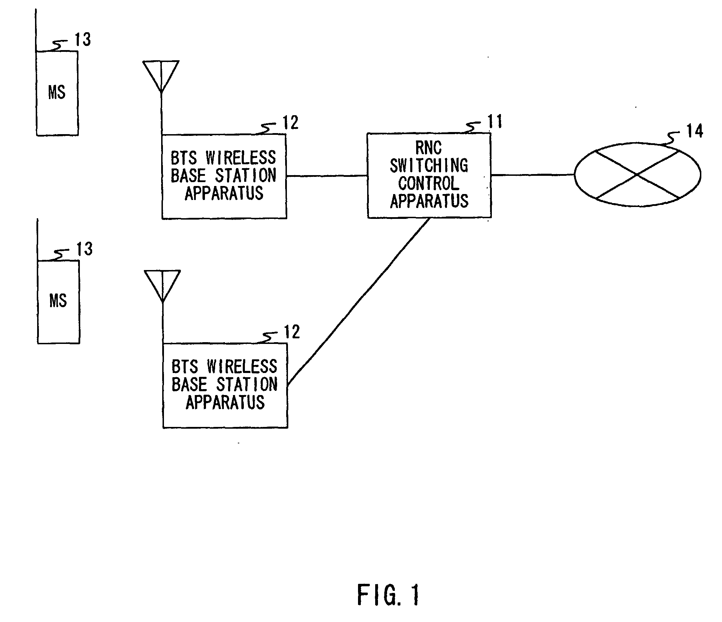

FIG.1 is a system configuration diagram of a mobile communication system. As shown in FIG.1, a mobile communication system consists chiefly of switching control apparatus (RNC) 11, base station apparatus (BTS) 12, and communication terminal apparatus (MS) 13.

Switching control apparatus 11 cross-connects several base stations with backbone network 14 which is in the public circuit. Meanwhile base station apparatus 12 performs wireless communication with communication terminal apparatus 13 in its cell.

As with current wireless communication services, the feasibility or infeasibility of access in response to call requests and the speed of communication depend on the state of saturation in communication channels, and only when the communication channels have room, is it possible to gain channel access and to increase the communication speed.

However, the problem of depletion of frequency resources is envisaged as with the wireless communication services of the near future due to an upsurge of wireless communication users and growing demand for increasing communication speed, and a timely reaction to this problem is needed.

The purpose in using wireless communication services might vary on a per user basis, such as to report to the police or the fire department in which case emphasis lies on the urgency aspect, multi-media data communication in which case emphasis lies on the high-speed aspect, and private conversation in which case emphasis lies on neither the urgency nor the high-speed aspect.

Currently, for the efficient use of frequency resources, various wireless communication services are offered according to the purpose of use, and these include the multilayer cell method whereby a communication channel of either a mobile phone or a PHS is selectively accessed, as well as the method for high-speed communication by using two PHS channels.

However, these types of services are possible only on the conditions that wireless communication channels including frequency resources have room, and the problem that a user in urgency will be denied channel access when channels are saturated remains unsolved.

### Disclosure of Invention

The present invention aims to provide a wireless base station apparatus and channel accession control method that satisfy every user's need in respect to wireless communication services and that furthermore make effective use of frequency resources.

The above object is to provide wireless communication service that includes assigning priority and communication speed for access in reply to calls according to the type of user contract. That is , the above object can be achieved as follows: with respect to a user that desires good-quality service, a service is offered whereby channel access in reply to a call is secured with priority at the expense of special charges even where the channels are saturated, while with respect to a user that desires a low-rate contract, service is offered at low-rates, on the conditions that communication may be cut off when the channels become saturated.

### Brief Description of Drawings

FIG.1 is a system configuration diagram showing a technical structure of a wireless communication system;
FIG.2 is a block diagram showing a configuration of a base station apparatus according to an embodiment of the present invention;
FIG.3 is a flow chart showing channel accession control processing for a base station apparatus according to an embodiment of the present invention;
FIG.4 is a flow chart showing channel accession control processing for a base station apparatus according to an embodiment of the present invention; and
FIG.5 is a block diagram showing a configuration of a communication terminal apparatus according to an embodiment of the present invention.

### Best Mode for Carrying Out the Invention

Now embodiments of the present invention will be described with reference to the accompanying drawings.

In the following descriptions, a user that receives good-quality service at the expense of high contract rates is called a priority user, while a user that makes a low-rate contract on the conditions that communication may be cut off or the communication speed may be reduced when a channel is saturated is called a low-rate user. Furthermore, as in conventional cases, a user with a type of contract whereby the feasibility or infeasibility of access depend solely on the status of saturation in a communication channel is called a conventional user.

Of the low-rate user, furthermore, one that unconditionally accepts a channel cutoff request or a low-speed communication request is called a first low rate user. On the other hand, one that is able to choose whether or not to accept a channel cutoff request or a low-speed communication request is called a second low-rate user.

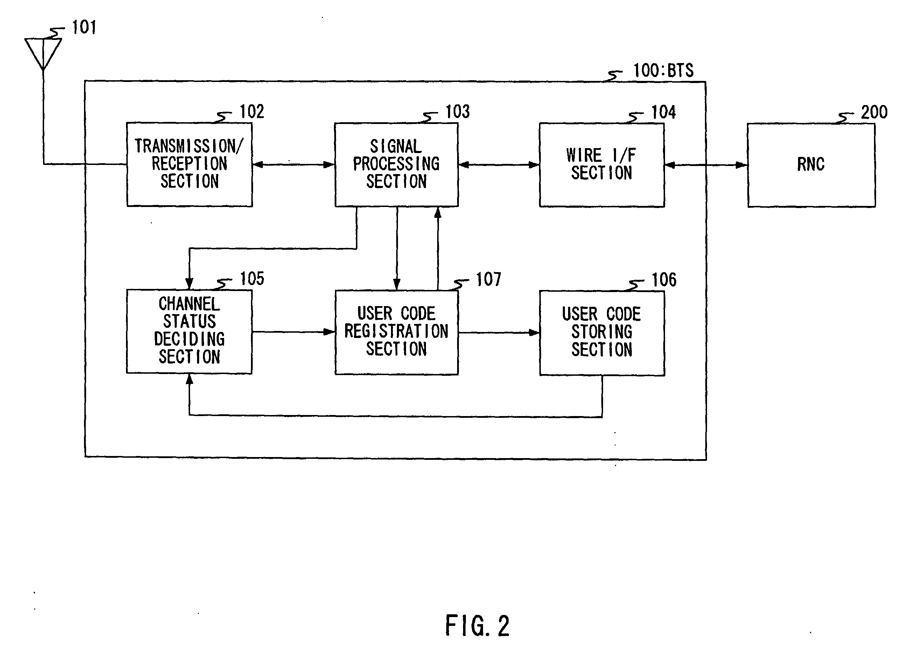

FIG.2 is a block diagram showing a configuration of a base station apparatus according to an embodiment of the present invention.

In base station apparatus 100 shown in FIG.2, antenna 101 receives a signal transmitted from a communication terminal apparatus and outputs the signal to transmission/reception section 102. Antenna 101 then sends the signal output from transmission/reception section 102 to communication terminals by wireless transmission.

Transmission/reception section 102 processes the radio frequency signal input from antenna 101 into a baseband signal and then outputs the baseband signal to signal processing section 103. Also, transmission/reception section 102 converts the baseband signal input from signal processing section 103 into a radio frequency signal and outputs the radio frequency signal to antenna 101.

Signal processing section 103 executes modulation processing and decoding processing on the baseband signal input from transmission/reception section 102 and extracts the received data and various control signals. Furthermore, signal processing section 103 outputs the received data, the user codes of users accessing or cut off from a channel, and information that denotes the communication speed of currently communicating users (hereinafter "communicaiton speed data"). Signal processing section 103 then outputs a call access request signal and a high-speed communication request signal to channel status deciding section 105, and outputs the call access-requesting user code and a channel cutoff acceptance signal to user code registration section 107.

Also signal processing section 103 appends control information to the transmission data input from switching control apparatus 11 via wire I/F section 104, and outputs the transmission data to transmission/reception section 102 after coding processing and modulation processing. Furthermore, when the user code of a user subject to a channel cutoff or the user code of a user subject to a communication speed reduction is input from user code registration section 107, signal processing section 103 outputs a channel cutoff request signal or a low-speed communication request signal for the user in question to transmission/reception section 102.

When a call access request signal is input from signal processing section 103, channel status deciding section 105 makes decisions as to whether or not the channel is saturated based on the number of currently communicating users registered in user code storing section 106 and then outputs the decision to user code registration section 107. When there is a high-speed communication request signal, channel status deciding section 105 considers if there is room in the channel to perform high-speed communication and makes decisions as to whether or not the channel is saturated.

User code storing section 106 stores the user codes of currently communicating users and communicaiton speed data corresponding to each user.

User code registration section 107 identifies the type of the user that has requested a call access based on the user code input from signal processing section 103, registers the identification result into user code storing section 106, and outputs the registration result to signal processing section 103.

If a priority user makes a call access request when the channel is saturated, user code registration section 107 searches user code storing section-106 to see whether or not there is any low-rate user registered and, if there is, outputs such user to signal processing section 103.

When a channel cutoff is accepted, user code registration section 107 overwrites the user code of the priority user over the user code of the low-rate user that is subject to the channel cutoff stored in user code storing section 106. The user code of the removed low-rate user and the user code of the newly registered priority user are output to signal processing section 103.

If a priority user makes a high-speed communication request when the channel is saturated, user code registration section 107 searches user code storing section 106 to see whether or not there is any low-rate user registered and, if there is, outputs such user to signal processing section 103.

When a communication speed reduction is accepted, user code registration section 107 overwrites the user code of the priority user over the user code of the low-rate user that is subject to the channel cutoff stored in user code storing section 106. The user code of the removed low-rate user and the user code of the newly registered priority user are output to signal processing section 103.

Switching control apparatus 200 shown in FIG.2 performs wireless communication with base station apparatus 100, stores currently communicating users' user codes and communication speed data, and charges-based on these data.

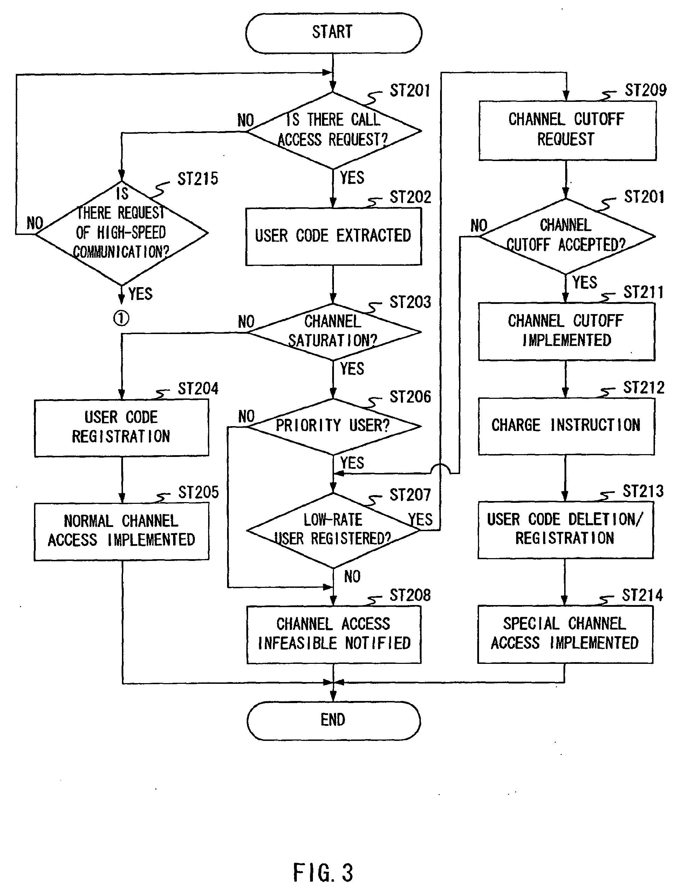

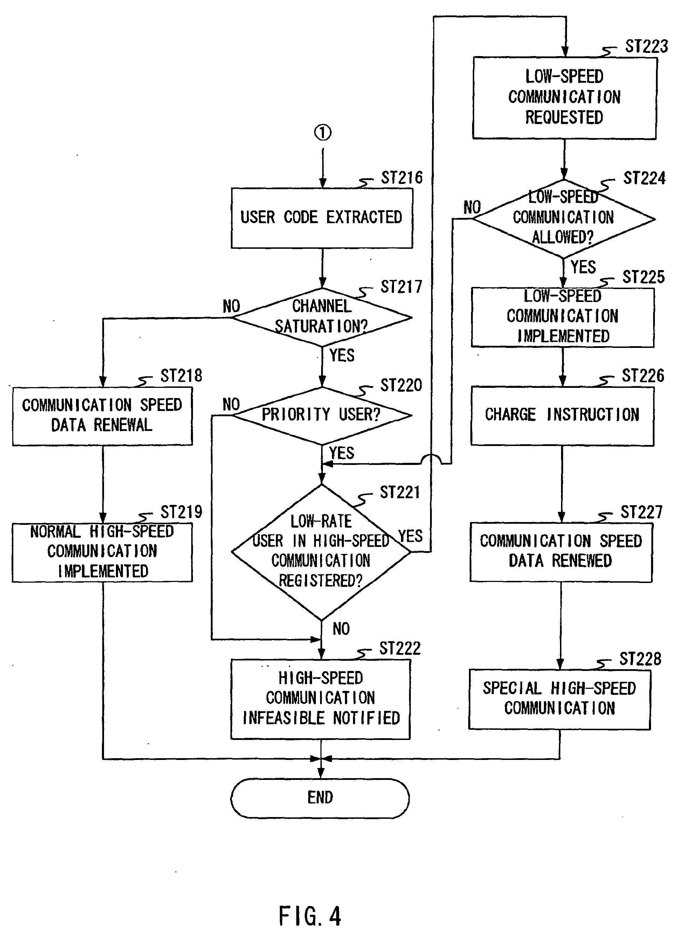

Next channel access control processing by the above-described base station apparatus will be described using FIG.3 and the flow chart in FIG.4.

To begin with, in step (hereinafter "ST") 201 and in ST 202, upon receiving a call access request signal from a user that wants to newly start communication, signal processing section 103 outputs the call access request signal to channel status deciding section 105 and registers the user code with user code registration section 107.

Next in ST 203, channel status deciding section 105 makes decisions as to whether or not the channel is saturated based on the number of currently communicating users registered with user code storing section 106, and outputs the decision to user code registration section 107.

When the decision from ST 203 reveals that the channel has room, in ST 204, user code registration section 107 registers with user code storing section 106 the user code of the user that has made a call access request.

In ST 205, signal processing section 103 transmits a signal to the effect of allowing channel access to the user that has made a call access request and implements channel access.

In contrast, when the decision from ST 203 reveals that the channel is saturated, in ST 206, user code registration section 107 identifies as to whether or not the user that has made a call access request is a priority user based on the user code.

When the identification in ST 206 reveals the user that has made a call access request to be a priority user, in ST 207, user code registration section 107 searches user code storing section 106 to see whether there is any low-rate user registered.

When the identification in ST 206 reveals the user that has made a call access request not to be a priority user, and when the search in ST 207 reveals that there is no low-rate user registered, in ST 208, signal processing section 103 finishes the processing by way of transmitting a signal to the effect of denying channel access to the user that has made a call access request.

When the search in ST 207 reveals that a low-rate user is registered, in ST 209 and in ST 210, signal processing section 103 transmits a signal to the effect of cutting off the channel to the searched-out low-rate user. If a channel cutoff request is made thereupon, a first low-rate user unconditionally accepts the request while a second low-rate user chooses whether or not to accept the request.

In ST 211 and in ST 212, upon receiving a signal to the effect of accepting a channel cutoff from the relevant low-rate user, signal processing section 103 implements a channel cutoff in respect to the relevant user and instructs switching control apparatus 200 to charge the priority user that has made a call access request special charges.

In ST 213, user code registration section 107 overwrites the user code of the user that has made a call access request over the user code subject to a channel cutoff in user code storing section 106.

In ST 214, signal processing section 103 transmits a signal to the effect of allowing channel access to the user that has made a call access request and implements channel access.

Where the channel status has reached point of saturation, it is possible to offer wireless communication service that includes priority of access in reply to calls based on the type of user contract, by thus selecting users to allow channel access based on user priority.

Furthermore, in ST 215 and in ST 216, upon receiving from a user a high-speed communication request signal in request of high-speed communication, signal processing section 103 outputs the high-speed communication request signal to channel status deciding section 105 and outputs the user code to user code registration section 107.

Next in ST 217, channel status deciding section 105 makes decisions as to whether or not the channel is saturated based on the number of currently communicating users registered with user code storing section 106, and outputs the decision to user code registration section 107.

When the decision from ST 217 reveals that the channel has room, in ST 218, user code registration section 107 renews the speed communication speed data of the user that has made a high-speed communication request in user code storing section 106 into "High speed communication in progress."

Then in ST 219, signal processing section 103 transmits a signal to the effect of allowing high-speed communication to the user that has made a call access request and implements high-speed communication.

In contrast, when the decision from ST 217 reveals that the channel is saturated, in ST 220, user code registration section 107 identifies as to whether or not the user that has made a call access request is a priority user based on the user code.

When the identification in ST 220 reveals the user that has made a call access request to be a priority user, in ST 221, user code registration section 107 searches user code storing section 106 to see whether there is any low-rate user registered.

When the identification in ST 220 reveals the user that has made a call access request not to be a priority user, and when the search in ST 221 reveals that there is no low-rate user registered performing high-speed communication, in ST 222, signal processing section 103 finishes the processing by way of transmitting a signal to the effect of disallowing high-speed communication to the user that has made a call access request.

When the search in ST 223 reveals that a low-rate user is registered performing high-speed communication, in ST 224 and in ST 225, signal processing section 103 transmits a signal to the effect of reducing the communication speed or cutting off the channel to the searched-out low-rate user. If low-speed communication request is made thereupon, a first low-rate user unconditionally accepts the request while a second low-rate user chooses whether or not to accept the request.

In ST 225 and in ST 226, upon receiving a signal to the effect of accepting low-speed communication from the relevant low-rate user, signal processing section 103 implements low-speed communication or a channel cutoff in respect to the relevant user and instructs switching control apparatus 200 to charge the priority user that has made a call access request special charges.

In ST 227, user code registration section 107 renews the communication speed data of the user that has made a high-speed communication request into "High-speed communication in progress," and the communication speed data of the user that has accepted low-speed communication into "Low-speed communication in progress" or "Channel cutoff."

In ST 228, signal processing section 103 transmits a signal to the effect of allowing channel access to the user that has made a call access request at the expense of special charges and implements channel access.

By thus reducing the communication speed or cutting off a channel in respect to a low-rate user engaged in high-speed communication while a channel is saturated, a priority user's communication speed increases, it is possible to increase a priority user's communication speed and to satisfy every user's need in respect to wireless communication services and furthermore make effective use of frequency resources.

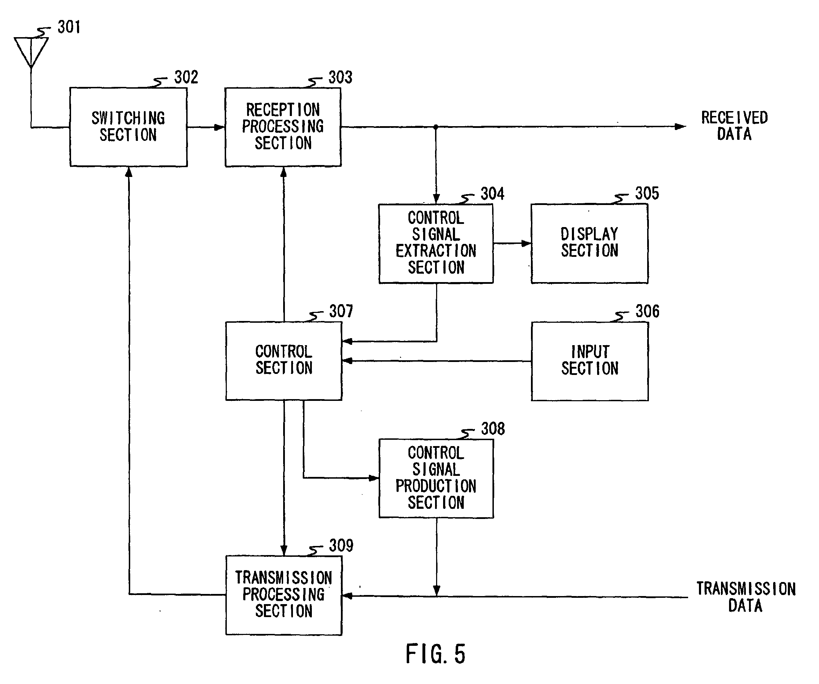

Processing in response to a call cutoff request or a low-speed communication request with respect to a low-rate user will be described next with FIG.5. FIG.5 is a block diagram showing a configuration of a communication terminal apparatus according to the present embodiment.

In FIG.5, reception processing section 303 executes modulation modification, amplification, and demodulation processings respectively on a signal that is received by antenna 310 and input via switching section 302 to extract the received data.

Control signal extraction section 304 extracts the control signal contained in the received data, and then, upon extracting a call cutoff request signal or a low-speed communication request signal, each a control signal, displays upon display section 305 to the effect thereof and outputs the extracted signal to control section 307.

Input section 306 converts the button-operated instructions from a user into electric signal and outputs the electric signal to control section 307. When the user is a second low-rate user, the user chooses whether or not to accept the call cutoff request or the low-speed communication request displayed on display section 305 and outputs the choice to control section 307 by means of button-operating input section 306.

Control section 307 instructs reception processing section 303 and transmission processing section 309 to make modifications in respect to the communication speed, channel access, and channel cutoff.

At this point if the user in question is a first low-rate user and if there is a call cutoff request or a low-speed communication request, control section 307 instructs control signal production section 308 to produce a signal to the effect of unconditionally accepting such request.

If there is a call cutoff request or a low-speed communication request and the user is a second low-rate user, control section 307 instructs control signal production section 308 to produce a signal to the effect of accepting or rejecting such request based on the user's instructions input via input section 306.

Control signal production section 308 produces a control signal in compliance with the instructions from control section 307 and superposes the control signal upon transmission data.

Transmission processing section 309 executes frequency modulation, amplification, and demodulation processings respectively upon the transmission data upon which a control signal has been superposed and transmits the processed data from antenna 301 via switching section 302.

With the present invention, incidentally, each user is able to determine a contract type such as the priority type or the low-rate type at the time of contract or enter such contract on a per call basis.

As obvious from the above descriptions, the use of the base station apparatus and channel access control method according to the present invention makes it possible to offer wireless communication service including access priority and communication speed in response to calls according to the type of user contract, and it is thus possible to satisfy each user's need in respect to wireless communication service and furthermore to make effective use of frequency resources.

This application is based on Japanese Patent Application No.11-156419 filed on June 3, 1999, and Japanese Patent Application No.11-192946 filed on July 7, 1999, entire content of which is expressly incorporated by reference herein.

### Industrial Applicability

The present invention is suitable for use with base station apparatus for mobile communication systems such as mobile phones and car-phones.

## Claims

1. A base station apparatus, comprising:
a channel status deciding section that makes decisions as to whether or not a channel status is saturated based on the number of currently communicating users, and
a channel access control section that, when the channel status is saturated, selects a user to allow channel access or high-speed communication based on the user's priority.

2. The base station apparatus according to claim 1, wherein, when the channel status is saturated and there is a channel access request from a high priority user, said channel access control section cuts off a channel in respect to a low-priority user from among currently communicating users and secures a channel for the high-priority user.

3. The base station apparatus according to claim 2 wherein, upon sending a signal that requests a channel cutoff to a currently communicating low-priority user and then receiving a signal that accepts the channel cutoff from the low-priority user, said channel access control section cuts off a channel in respect to the low-priority user and secures a channel for the high priority user.

4. The base station apparatus according to claim 1 wherein, when the channel status is saturated and there is a channel access request from a high priority user, said channel access control section reduces communication speed or cuts off a channel in respect to a low-priority user currently engaged in high-speed communication and increases the high priority user's communication speed.

5. The base station apparatus according to claim 4 wherein, upon sending a signal that requests to reduce communication speed or to cut off a channel to a low-priority user currently engaged in high-speed communication and then receiving a signal to accept low-speed communication or to cut off a channel from the low-priority user, said channel access control section reduces communication speed or cuts off a channel in respect to the low-priority user and increases the high-priority user's communication speed.

6. A switching control apparatus that performs wireless communication with the base station apparatus according to claim 1 and that, when said base station apparatus cuts off a channel in respect to a currently communicating low-priority user and a high priority user gains access to a channel, charges special fees to the high-priority user.

7. A communication terminal apparatus that performs wireless communication with the base station apparatus according to claim 1 and implements a channel cutoff or a communication speed reduction based on an instruction from said base station apparatus.

8. A communication terminal apparatus that performs wireless communication with the base station apparatus according to claim 1 and that upon receiving a request for a channel cutoff or a communication speed reduction displays to the effect thereof and implements the channel cutoff or communication speed reduction in compliance with a instruction from a user.

9. A channel access control method whereby whether or not a channel status is saturated is decided based on the number of currently communicating users, and when the channel status is saturated and there is a channel access request from a high-priority user, a channel is cut off in respect to a low-priority user from among the currently communicating users and implements a channel access in respect to the high-priority user.

10. A channel access control method, whereby whether or not a channel status is saturated is decided based on the number of currently communicating users, and when the channel status is saturated and there is a high-speed communication request from a high-priority user, the high priority user's communication speed is increased by cutting off a channel or reducing communication speed in respect to a low-priority user from among the currently communicating users.
